# EUROPEAN PATENT SPECIFICATION

(11) **EP 4 054 772 B1**
(45) Date of publication and mention of the grant of the patent: **20.03.2024**
(21) Application number: 19804855.5
(22) Date of filing: 05.11.2019
(51) Int. Cl.: B08B 3/12, C23G 1/19, C23G 3/02

(54) **METHOD AND EQUIPMENT FOR THE CONTINUOUS CLEANING OF A MOVING STEEL STRIP**
VERFAHREN UND VORRICHTUNG ZUM KONTINUIERLICHEN REINIGEN EINES BEWEGLICHEN STAHLBANDES
PROCÉDÉ ET ÉQUIPEMENT POUR LE NETTOYAGE EN CONTINU D'UNE BANDE D'ACIER MOBILE

(43) Date of publication of application: 14.09.2022
(73) Proprietor: ArcelorMittal, 1160 Luxembourg (LU)
(72) Inventor: RICHET, Pierre, 57070 Metz (FR); SPONEM, Florent, 57640 Vigy (FR)
(74) Representative: Lavoix
(86) International application number: PCT/IB2019/059489
(87) International publication number: WO 2021/090045

(56) References cited:
- EP-A1- 2 739 777
- CN-U- 203 955 622
- KR-A- 20050 063 145
- US-A- 3 066 084
- US-A1- 2008 210 256

## Description

The present invention relates to a cleaning tank comprising at least transducer one for continuously cleaning a strip. Such an invention improves the cleaning efficiency of the cleaning process.

In the metallurgical field, producing strip having a high surface quality is of a major importance. During the rolling step, iron, metallic particles, dirt and grease adhere to the metal strip. Such adhesions engender a degradation of the strip surface quality post-coating because they will be entrapped under the coating and thus the surface will not be smooth. In order to avoid such drawbacks, the strip is cleaned before the coating step. Generally, it occurs after the rolling operation and before the annealing or the coating. To do so, most of the cleaning lines uses an electrolytic process among their cleaning operations. However, such a technique presents a high safety risk due to the H₂ accumulation leading to safety hazards such as fire. Consequently, cleaning lines using ultrasound have been developed to replace the electrolytic process.

Ultrasound cleaning works thanks to the propagation of an ultrasound wave (or more generally an acoustic wave) through an aqueous solution which induces local variations of the aqueous solution pressure. When the negative pressure is low enough (lower than the aqueous solution vapour pressure), the aqueous solution cohesive forces break down, and gas bubbles (also called cavitation bubbles) are formed. These bubbles are then submitted to pressure variations (due to acoustic wave propagation), which cause them to expand and contract successively until they collapse. Ultrasonic waves induce a thermal effect, but also a mechanical effect due to cavitation. Indeed, two phenomena occur when cavitation bubbles break down:
- shock waves due to the violent compression of the gas present in the bubble,
- micro-jets: near a solid surface, the bubble implosion becomes dissymmetrical and the resulting shock wave produces aqueous solution micro-jets that are directed toward the solid surface. The impacts of the micro-jets on the solid surface are energy-rich, and this mechanical effect can be used in galvanization for the cleaning of the strip surface after cold rolling.

Patent KR 2005 006 3145 discloses an apparatus cleaning a steel sheet. Said steel sheet is passed through a tank filled with an alkaline solution in which ultrasound emitting boxes or crates are placed on each side of the passing sheet. Those ultrasound emitting boxes comprise ultrasound emitting means, such as piezo-electric transducers, stuck on the crate sides. When the piezo-electric transducers vibrate, the vibration is transmitted to the crate sides and then to the solution. Consequently, ultrasound waves are propagated in the cleaning bath and onto the strip. It increases the cleaning efficiency.

However, by using the above method and its equipment, the cleaning efficiency is not optimal.

The purpose of this invention is to provide a solution solving the aforementioned problems.

This object is achieved by providing an equipment according to claim 1. This object is also achieved by providing a method according to claims 8 to 10.

Other characteristics and advantages of the invention will become apparent from the following detailed description of the invention.

To illustrate the invention, various embodiments and trials of non-limiting examples will be described, particularly with reference to the following figure:
Figures 1A and 1B exhibit a lateral and a front view of an embodiment of a tank equipped with transducers.
Figures 2A and 2B exhibit a lateral and a top view of a second embodiment of a tank equipped with transducers.
Figures 3A and 3B show two embodiments of transducers.
Figures 4A and 4B exhibit two embodiments of means to support the transducers.
Figure 5 shows a preferred arrangement of the transducers and the associated waves.
Figure 6 shows the effect of the type of ultrasound emitting means on the cleaning efficiency.

The invention relates to an equipment 1 for the continuous cleaning of a moving steel strip S comprising:
- a tank 2 containing an aqueous solution 3,
- at least a roll 4 for guiding said strip into said tank 2,
- at least a transducer 5 immerged in the aqueous solution 3.

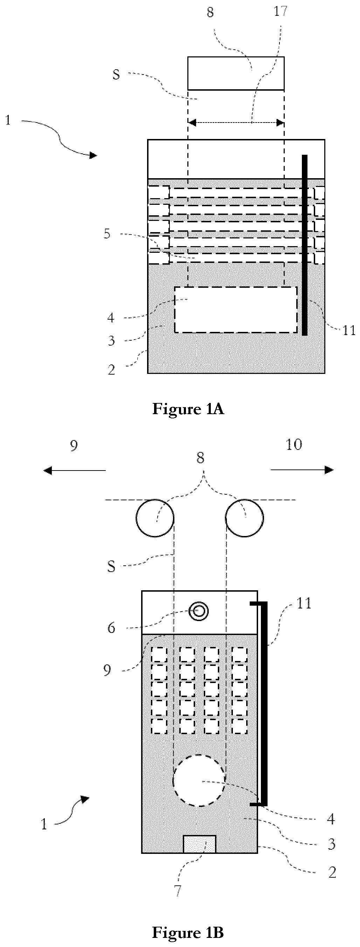

Figure 1A is a lateral view and Figure 1B is a front view of the continuous cleaning installation. As illustrated in Figures 1A and 1B, the continuous cleaning installation 1 of a moving strip S comprises a tank 2, an aqueous solution 3 inside said tank. It also comprises at least a roll 4 immerged in said aqueous solution 3 and at least a transducer 5. The aqueous solution can contain an alkali product or an acidic solution or a neutral solution to improve the cleaning efficiency. The solution selection depends on the substrates and the pollutants.

The tank can also comprise means for feeding 6 an aqueous solution into the tank and emptying 7 the tank.

As illustrated in Figure 1A, the feeding means 6 are preferentially situated in the upper portion of the tank or at the top of the tank allowing a better filling of the tank, so the cleaning time and the distance passed by the strip through the aqueous solution is increased. The emptying means 7 are placed in the lower portion of the tank and preferentially at its bottom in order to empty the tank as much as possible, such means can be pipes and valves connected to a dump, a recycling or a regenerating process.

The at least one roll 4 is preferentially at the bottom of the tank but above the emptying means 7, such an arrangement increases the distance travelled by the strip S through the aqueous solution 3 and the cleaning time thus improving the cleaning.

The aqueous solution 3 is introduced into the tank by the feeding means 6 such as pipes and valves, preferentially connected to another tank filled with the solution (not represented).

As illustrated in Figure 1A, the cleaning installation 1 preferably comprises at least two external rolls 8 placed above said tank 2, at least one on each side of the tank e.g.: one on the upstream side 9, the other one on the downstream side 10 of the ultrasonic cleaning installation. The rolls 8 and 4 have preferentially the same orientation, e.g. their rotation axes are parallel. The rolls positioning should preferably allow the strip S to pass through the aqueous solution 3 without being twisted.

Moreover, it can also comprise means for estimating 11 the aqueous solution level. The means for estimating 11 the aqueous solution level can be a differential pressure captor, vibrating level switches or any means used in a hydrostatic method.

The at least one transducer 5 is placed inside said tank 2 preferably under the feeding means 6 and preferably above the roll 4.

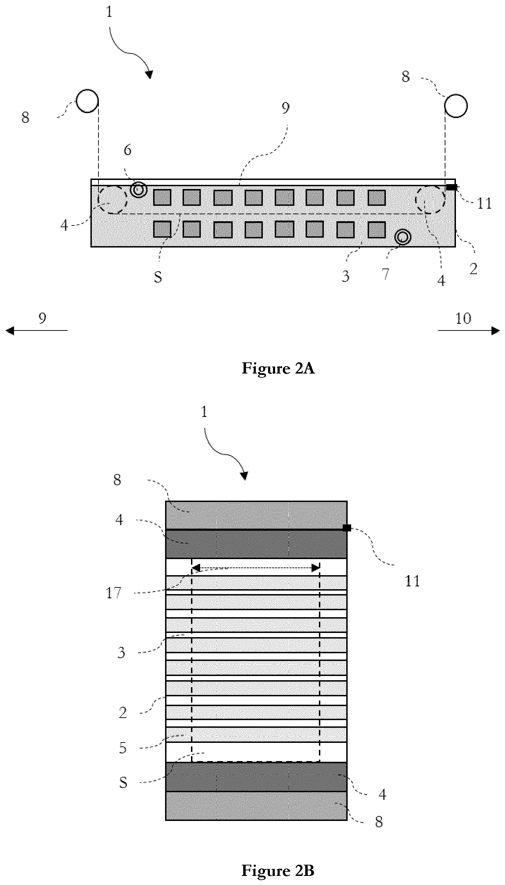

Figures 2A and 2B exhibit the lateral and top view of a second preferred embodiment of the continuous cleaning installation in which the strip S is majorly moved horizontally through the aqueous solution compared to the Figures 1A and 1B where the strip S is majorly passed vertically.

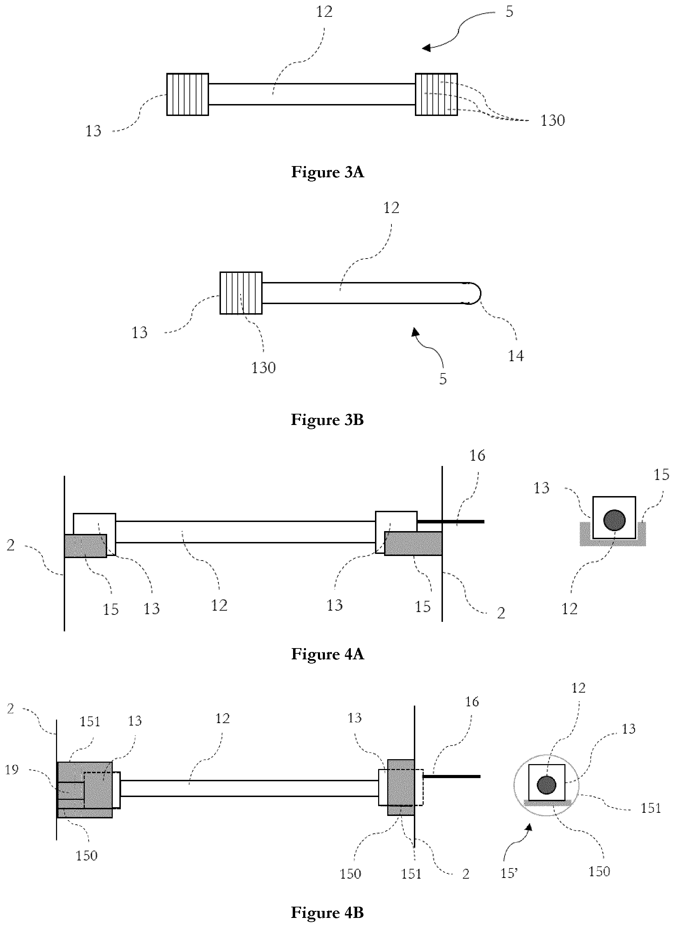

The transducer 5, as illustrated in Figure 3A and 3B, is made of a resonator rod 12 having at either one or both extremities a driverhead 13, such as push-pull piezo transducers. Said driverhead 13 generally comprises several piezoelectric transducers 130. The resonator rod 12 vibrates thanks to the at least one driverhead 13. Such a system emits omnidirectionally ultrasound. When the transducer comprises only on driverhead, the other extremity 14 is preferably round or pointy as illustrated in Figure 3B.

As illustrated in Figure 4A and 4B, the transducers 5 are preferably supported by the tank wall 2 or support pieces 15, 150 and 151 fixed to the tank wall. Preferably, the electric wires 16 connected to said driverheads 13 pass through the tank wall 2 and are not immerged in nor in contact with the aqueous solution.

The transducers work is able to work at a frequency between 20 and 60 kHz. Preferably, the transducers work at a frequency of at least 25 kHz. Preferably, the transducers work at a frequency of maximum 40 kHz. Each transducer is preferably able to work at a power of 500 to 3 000 kW. Even more preferably, each transducer has a power of at least 2 000 kW.

During the cleaning process, the bath level can vary to a point where a transducer is not immerged anymore, in that case it is preferable to turn off the non-immerged resonator to avoid damage due to overheating. During maintenance operation, the tank can be emptied, in that case it is preferable to turn off the resonator to avoid damage due to overheating. Overall, when a resonator is not immerged of at least 3 cm below the aqueous solution surface, it is preferable to turn it off to lower the risk of damage due to overheating.

A cleaning tank according to the invention, comprising at least a transducer, permits to improve the cleaning efficiency compared to the cleaning tank as known in the art, comprising immerged boxes with ultrasonic emitter means having the same working frequency.

Several tests have been done to demonstrate the improved efficiency of the a cleaning tank equipped with transducers, such as push-pull transducers, compared to one equipped with submersible boxes. In those tests, the cleanliness of a strip sample has been measured before and after a cleaning step. In those experiments, a strip is immersed during 24 sec in a box containing a cleaning bath, having 10 g.L⁻¹ of NaOH, at 65°C and either a set of two push-pull piezo transducers having a power of 2 kW or a submersible box having a power of 2 kW. It is assumed that an immersion time of 24 seconds in the experiment conditions corresponds to a direct exposition time of about 6 seconds because a strip portion is faced by an ultrasound emitter means only during a quarter of the experiment time due to its displacement through the aqueous solution.

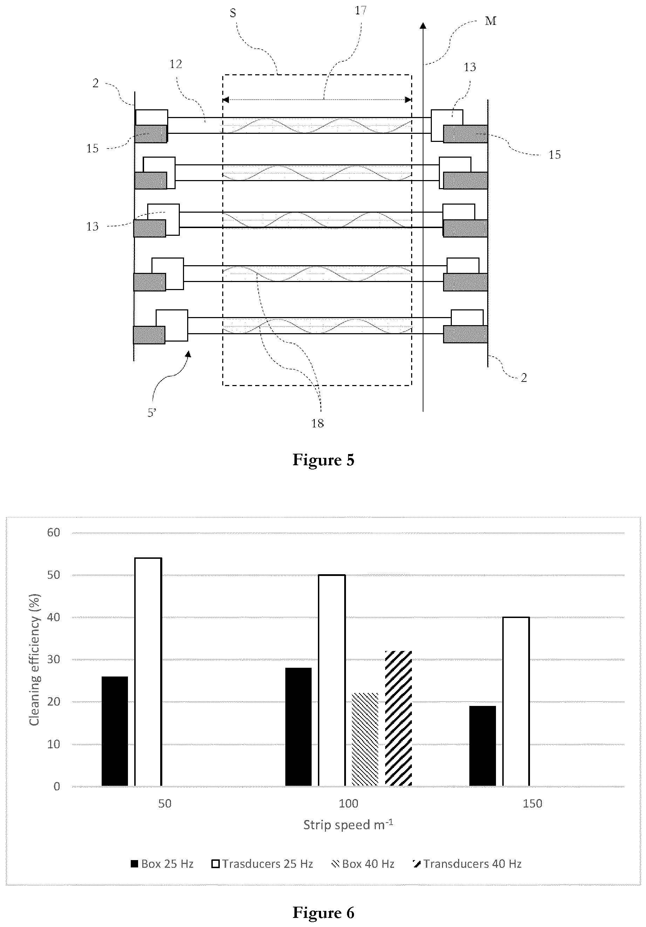

The cleaning efficiency, as noted in the following table, is: "the estimated cleanliness before the cleaning step" divided by "the estimated cleanliness after the cleaning step". To estimate the cleanliness, a 3M 595 Scoth^{™} adhesive is pressed on a strip surface in order to stick the iron fines and the oil onto the adhesive. Then the reflectance of the scotch is measured by a reflectometer. This reflectance is linked to the density of iron fines per square meter. The more iron fines have adhered to the adhesive, the lower will be its reflectance. Consequently, the higher is the adhesive reflectance, the cleaner is the strip. The following table contains the main parameters of the experiment. In Figure 6, the cleaning efficiency is, for various strip speed, plotted for both types of ultrasound emitting means : the push-pull tubes and the submersible boxes.

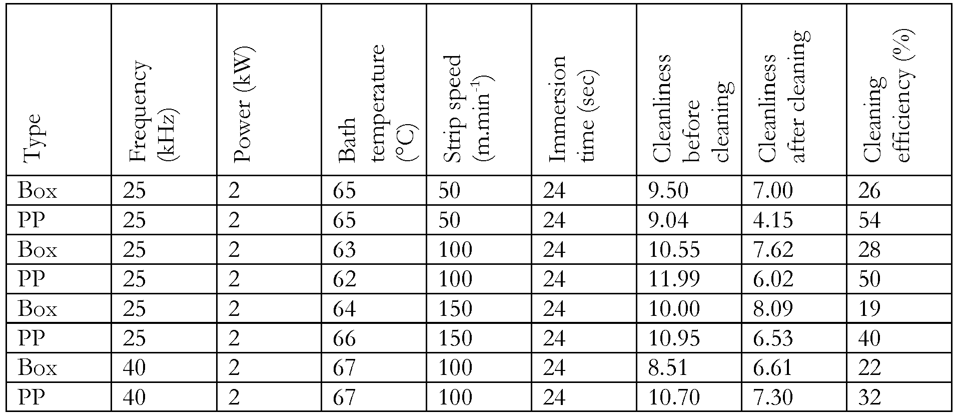

Preferably, all the resonators in functioning are completely immerged of at least 3 cm under the solution surface. It permits to lower the risk of overheating of the resonators.

Preferably, as it can be seen in Figure 5, said transducer 5 has its length parallel to the strip width 17. In other words, the resonator rod 12 has its length parallel to the strip width 17. Even more preferentially, the transducer is positioned parallel to the strip width 17 in a way that it covers the whole strip width. Such an arrangement should improve the cleaning efficiency and the cleaning homogeneity along the strip width.

When the tank comprises at least two transducers having a resonator rod length smaller than the strip width, the resonator rods are shifted in order to cover the whole strip width.

Preferably, as illustrated in Figures 1A and 2A, the tank comprises at least two transducers 5. Even more preferably, the tank comprises 5, 10 or 15 transducers.

When there are two transducers on the same side of the strip, they are preferably shifted one from another by a distance corresponding to (0.5) times the wavelength produced by the push-pull transducers. When the number of ultrasound emitting means is equal to m, each of them can be further shifted by a similar distance, (1/m) times the wavelength towards its neighbours. For example, if six transducers working at a frequency of 25 kHz are used in an environment comparable to water, the wave speed, which depends on numerous factors (e.g.: the temperature and the pressure) is approximately of 1500 m.s⁻¹. The wavelength is equal to the wave speed divided by the wave frequency so in this case, 1 500/25 000 = 0.06, the wavelength is approximately of 6 cm. In the case where the ultrasound emitting means produce ultrasound with a wavelength of 6 cm, they should be laterally shifted of, (1/6) x6 = 1 cm one from another.

As it can be seen in Figure 5, such an arrangement prevents having two nodes 18 aligned in the strip moving direction. Such a shift allows improving the cleaning homogeneity, as it ensures that all points of the strip are being exposed to at least one ultrasound wave.

Preferably, the transducers 5 and the strip S are spaced by a distance comprised between 40 mm and 250 mm. Such spacing enables to efficiently use the ultrasound emitting mean. Such spacing distance improves the installation 1 because if the spacing if less than 40 mm, the ultrasound emitting mean will eventually be broken by the strip S due for example strip bending or strip flatness irregularities. But if the spacing is bigger than 200 mm then the efficiency of the ultrasound emitting mean cleaning power seems to be severely reduced.

Preferably, each surface of said strip S is faced by at least one transducer. Even though an ultrasound emitting mean placed on one side of a strip cleans both surfaces, having ultrasound emitting means facing each surface increases the cleaning quality. In other words, in an installation similar to the one represented in Figures 1A and 1B, at least one transducer 5 is positioned between a tank wall and the strip S and at least one transducer is positioned between a portion of the strip going down and a portion of the strip going up. Similarly, in an installation similar to the one represented in Figures 2A and 2B, at least one transducer is placed above and at least one other is placed under the strip.

Preferably, said equipment has a power density between 5 Watt per litre and 25 Watt per litre of unit of volume of said aqueous solution. Even more preferentially, the power per litre is between 10 and 20 Watt per litre. Using a power density in this range seems to be the best compromise between the cleaning efficiency and energy saving, it allows a good and sufficient cleaning of the strip and avoid energy waste.

This invention also relates to a method for cleaning a moving strip in a cleaning installation comprising a tank 2 containing an aqueous solution 3, at least a roll 4 for guiding said strip into said tank 2, at least a transducer 5 immerged in the aqueous solution comprising the steps of
- immerging said moving strip into said aqueous solution 3,
- emitting ultrasound, into said aqueous solution, with said at least one transducer immerged in the aqueous solution.

Preferably, said aqueous solution contains between 10 grams per litre and 40 grams per litre of alkali product. Apparently, an alkali product concentration in this range improves the cleaning and efficiently uses the alkali product.

Preferably, said aqueous solution is kept at a temperature between 30°C and 80°C. Apparently, higher is the cleaning solution temperature, better is the cleaning efficiency of the process but shorter is the transducer lifespan. This range seems to be the best compromise between cleaning efficiency and the ultrasound emitting mean lifespan.

## Claims

1. An equipment (1) for the continuous cleaning of a moving steel strip (S) comprising:
- a tank (2) containing an aqueous solution (3),
- at least a roll (4) for guiding said strip into said tank (2),
- at least a transducer (5), comprising a resonator rod (12) having at either one or both extremities a driverhead (13), immerged in the aqueous solution.

2. Equipment according to claim 1, wherein said at least one transducer (5) is able to work at a frequency between 20 and 60 kHz.

3. Equipment according to claim 1, wherein said at least one transducer (5) is able to work at a power of 500 to 3 000 kW.

4. Equipment according to claim 3, wherein said transducer (5) has its length parallel to the strip width.

5. Equipment according to anyone of claims 3 or 4, wherein said transducer (5) and the strip (S) are spaced by a distance comprised between 40 mm and 250 mm.

6. Equipment according to anyone of claims 1 to 6, wherein each surface of said strip S is faced by at least one transducer (5).

7. Equipment according to anyone of claims 1 to wherein said equipment has a power capacity between 5 Watt per litre and 25 Watt per litre of unit of volume of said aqueous solution.

8. A method for cleaning a moving steel strip in a cleaning installation comprising a tank (2) containing an aqueous solution (3), at least a roll (4) for guiding said strip into said tank (2), at least a transducer (5), comprising a resonator rod (12) having at either one or both extremities a driverhead (13), immerged in the aqueous solution comprising the steps of
- immerging said moving strip into said aqueous solution (3),
- emitting ultrasound, into said aqueous solution, by said at least one transducer immerged in the aqueous solution.

9. Method according to claim 8, wherein said aqueous solution contains between 10 grams per litre and 40 grams per litre of alkali product.

10. Method according to anyone of claims 8 or 9, wherein said aqueous solution is kept at a temperature between 30°C and 80°C.

## Patentansprüche

1. Vorrichtung (1) zum kontinuierlichen Reinigen eines beweglichen Stahlbands (S), umfassend:
- einen Behälter (2), der eine wässrige Lösung (3) enthält,
- mindestens eine Rolle (4) zur Führung des Bandes in den Tank (2),
- mindestens einen Wandler (5), der einen Resonatorstab (12) umfasst, der an einem oder beiden Enden einen Treiberkopf (13) aufweist, der in die wässrige Lösung eingetaucht ist.

2. Ausrüstung nach Anspruch 1, wobei der mindestens eine Wandler (5) mit einer Frequenz zwischen 20 und 60 kHz arbeiten kann.

3. Ausrüstung nach Anspruch 1, wobei der mindestens eine Wandler (5) mit einer Leistung von 500 bis 3 000 kW arbeiten kann.

4. Ausrüstung nach Anspruch 3, wobei der Wandler (5) seine Länge parallel zu der Breite des Bands aufweist.

5. Ausrüstung nach einem der Ansprüche 3 oder 4, wobei der Wandler (5) und das Band (S) mit einem Abstand zwischen 40 mm und 250 mm beabstandet sind.

6. Ausrüstung nach einem der Ansprüche 1 bis 6, bei der jede Oberfläche des Bands S mit mindestens einem Wandler (5) versehen ist.

7. Ausrüstung nach einem der Ansprüche 1 bis 6, wobei die Ausrüstung eine Leistungskapazität zwischen 5 Watt pro Liter und 25 Watt pro Liter der Volumeneinheit dieser wässrigen Lösung aufweist.

8. Verfahren zum Reinigen eines beweglichen Stahlbands in einer Reinigungsanlage, die einen Tank (2), der eine wässrige Lösung (3) enthält, mindestens eine Rolle (4) zum Führen des Bandes in den Tank (2) und mindestens einen Wandler (5) umfasst, der einen Resonatorstab (12) mit einem Antriebskopf (13) an einem oder beiden Enden umfasst, der in die wässrige Lösung eingetaucht ist, mit den folgenden Schritten
- Eintauchen des beweglichen Bands in die wässrige Lösung (3),
- Aussenden von Ultraschall in die wässrige Lösung durch den mindestens einen in die wässrige Lösung eingetauchten Wandler.

9. Verfahren nach Anspruch 8, wobei die wässrige Lösung zwischen 10 g pro Liter und 40 g pro Liter Alkaliprodukt enthält.

10. Verfahren nach einem der Ansprüche 8 oder 9, wobei die wässrige Lösung auf einer Temperatur zwischen 30 °C und 80 °C bewahrt wird.

## Revendications

1. Équipement (1) pour le nettoyage continu d'une bande d'acier mobile (S) comprenant :
- un réservoir (2) contenant une solution aqueuse (3),
- au moins un rouleau (4) pour guider ladite bande dans ledit réservoir (2),
- au moins un transducteur (5), comprenant une tige de résonateur (12) doté à l'une ou aux deux extrémités d'une tête de commande (13), immergée dans la solution aqueuse.

2. Équipement selon la revendication 1, dans lequel ledit au moins un transducteur (5) peut fonctionner à une fréquence comprise entre 20 et 60 kHz.

3. Équipement selon la revendication 1, dans lequel ledit au moins un transducteur (5) peut fonctionner à une puissance de 500 à 3 000 kW.

4. Équipement selon la revendication 3, dans lequel ledit transducteur (5) présente une longueur parallèle à la largeur de la bande.

5. Équipement selon l'une quelconque des revendications 3 ou 4, dans lequel ledit transducteur (5) et la bande (S) sont espacés d'une distance comprise entre 40 mm et 250 mm.

6. Équipement selon l'une quelconque des revendications 1 à 6, dans lequel chaque surface de ladite bande S fait face à au moins un transducteur (5).

7. Équipement selon l'une quelconque des revendications 1 à 6, dans lequel ledit équipement présente une capacité de puissance comprise entre 5 Watts par litre et 25 Watts par litre d'unité de volume de ladite solution aqueuse.

8. Procédé de nettoyage d'une bande d'acier mobile dans une installation de nettoyage comprenant un réservoir (2) contenant une solution aqueuse (3), au moins un rouleau (4) pour guider ladite bande dans ledit réservoir (2), au moins un transducteur (5), comprenant une tige de résonateur (12) dotée à l'une ou aux deux extrémités d'une tête d'attaque (13), immergée dans la solution aqueuse, comprenant les étapes consistant à
- immerger ladite bande mobile dans ladite solution aqueuse (3),
- émettre des ultrasons, dans ladite solution aqueuse, par ledit au moins un transducteur immergé dans la solution aqueuse.

9. Procédé selon la revendication 8, dans lequel ladite solution aqueuse contient entre 10 grammes par litre et 40 grammes par litre de produit alcalin.

10. Procédé selon l'une quelconque des revendications 8 à 9, dans lequel ladite solution aqueuse est conservée à une température comprise entre 30 °C et 80 °C.
